(19) Europäisches Patentamt

European Patent Office

Office européen des brevets

(11) **EP 1 392 006 A1**

(12) **EUROPEAN PATENT APPLICATION**

(43) Date of publication:
**25.02.2004 Bulletin 2004/09**

(51) Int Cl.[7]: **H04B 7/08**

(21) Application number: **03016831.4**

(22) Date of filing: **23.07.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **22.08.2002 KR 2002049730**

(71) Applicant: **PANTECH CO., LTD.
Yongdungpo-gu, Seoul 150-711 (KR)**

(72) Inventor: **Lee, Jong Youl
Dongan-Gu, Anyang-Si, Gyounggi-Do, 431 (KR)**

(74) Representative: **Grosse, Wolfgang, Dipl.-Ing. et al
Patent- & Rechtsanwälte Grosse, Bockhorni &
Schumacher,
Forstenrieder Allee 59
81476 München (DE)**

(54) **Differential amplitude detection diversity receiver employing MRC and a method of receiving signals using the same**

(57) The present invention relates to a diversity receiver and, more particularly, to a differential amplitude detection diversity receiver employing MRC and a method of receiving signals using the same, calculating the distances between the amplitude ratios of signals received at each antenna and each amplitude candidate value and multiplying the distances by the amplitudes of signals currently received at each antenna. The differential amplitude detection diversity receiver of the present invention comprises: a majority of decision variable calculating sections configured to compute amplitude decision variables by multiplying the distances between the amplitude ratios of signals received at each antenna and each amplitude candidate value by the amplitudes of signals currently received at each antenna; and amplitude decision section configured to compose the computed amplitude decision variables and to determine the amplitude of the received signal by selecting amplitude candidate value corresponding to certain composed amplitude decision variable from the composed amplitude decision variables.

Figure 1

EP 1 392 006 A1

**Description**

## BACKGROUND OF THE INVENTION

### Field of the Invention

The present invention relates to a diversity receiver and, more particularly, to a differential amplitude detection diversity receiver employing Maximal Ratio Combining (MRC) and a method of receiving signals using the same, which calculates the distances, between the amplitude ratios of signals received at each antenna and each amplitude candidate value, and multiplies the distances by the amplitudes of signals currently received at each antenna.

### Background of the Related Art

In the field of next generation mobile communication technology, high efficiency modulation technologies, e.g. Quadrature Amplitude Modulation (QAM), Differential Amplitude Phase Shift Keying (DAPSK), are used to increase the data transmission rate in a limited frequency band.

QAM, employing the coherent demodulation techniques, has difficulties in estimating the exact amplitude and phase of signal at receiving part, and still more in employing coherent demodulation techniques in circumstances where signal fading is rapid.

DAPSK, employing differential detection method to overcome the defects of the coherent demodulation method, increases the band efficiency by detecting the amplitude of signal as well as the phase of signal, while DPSK only detects the phase of signal.

In general, in the field of next generation mobile communication technology, various methods for overcoming the fading phenomenon of transmission signal have been suggested and diversity receiver has been deemed as the most efficient means to solve this problem.

Diversity receiver, using the method of composing the signals transmitted from transmitting part and received at a majority of antennas, can be classified as the one using Equal Gain Combining (EGC) method, the one using Maximal Ratio Combining (MRC) method, etc. according to the method of composing the received signals.

Generally, diversity receivers employing coherent detecting method have been suggested. However, diversity receivers employing differential detecting method can be found in several cases. Most of diversity receivers employing differential detecting method employ post detecting method detecting phase and amplitude of composed signals after composing signals received through a majority of antennas.

The DAPSK post detection diversity receiver, researched and made public till now, uses the EGC method, which linearly sums up all the amplitude ratio and the difference of phase and uses the result as the decision variables. In particular, amplitude decision variable Y(nT) is determined from following equation 1:

【Equation 1】

$$Y(nT) = \frac{\sqrt{\sum_{l=1}^{L}|Z_l(nT)|^2}}{\sqrt{\sum_{l=1}^{L}|Z_l((n-1)T)|^2}}$$

Where L means the number of antennas, T means sampling period, and Z/(nT) means sampling signal.

The EGC method detects the amplitude by selecting amplitude candidate value ($\beta^m$, m=1,...,M) the closest to the amplitude decision variable Y(nT) from the amplitude candidate values and presupposes every interest value of all decision variables as 1 without considering the magnitude of the received signals proportional to S/N. Accordingly, the EGC method has a problem in that performance is worse than performance of the MRC method adding an extra weight to the more reliable signals by multiplying decision variables by the interest values proportional to the magnitude of the input signals.

## SUMMARY OF THE INVENTION

The present invention is to solve the above problems and the object of the present invention is to implement differential amplitude detection diversity receiver employing MRC method by calculating the distances, between the amplitude ratios of signals received at each antenna and each amplitude candidate value, and by multiplying the distances by the amplitudes of signals currently received at each antenna.

In order to achieve at least the above object, in whole or in parts, there is provided a differential amplitude detection diversity receiver employing MRC method, including: a majority of decision variable calculating sections for computing amplitude decision variables by multiplying the distances between the amplitude ratios of signals received at each antenna and each amplitude candidate value by the amplitudes of signals currently received at each antenna; and amplitude decision section for composing the computed amplitude decision variables and determining the amplitude of the received signal by selecting amplitude candidate value corresponding to a certain composed amplitude decision variable from the composed amplitude decision variables.

In addition, the decision variable calculating section includes: a majority of Differential Amplitude Calculators (DAC) calculating the amplitude ratios between the amplitudes of the signal received at the (n)th sampling period and (n-1)th sampling period (where n is integer); and a majority of Amplitude Hypothesis Calculators (AHC) computing the amplitude decision variables of the received signal by calculating the distances, between the amplitude ratios of signals received at each antenna calculated at the DAC and each amplitude candidate value, and by multiplying the distances by the amplitudes of signals received at the (n)th sampling period.

In addition, the amplitude decision section includes: Amplitude Combiner (AC) composing the amplitude decision variables of each antenna, computed by the decision variable calculating section, according to the amplitude candidate values; and Amplitude Detector (AD) determining the amplitude of the received signal by selecting amplitude candidate value corresponding to the composed amplitude decision variable, whose magnitude is the minimum among the composed amplitude decision variables.

Differently, in order to achieve at least the above object, in whole or in parts, there is provided a method of receiving signals using a differential amplitude detection diversity receiver employing MRC method, including: computing amplitude decision variables by multiplying the distances between the amplitude ratios of signals received at each antenna and each amplitude candidate value by the amplitudes of signals currently received at each antenna; composing the amplitude decision variables of each antenna according to the amplitude candidate values; and determining the amplitude of the received signal by selecting amplitude candidate value corresponding to the composed amplitude decision variable, whose magnitude is the minimum among the composed amplitude decision variables.

Preferably, said computing amplitude decision variables includes: calculating the amplitude ratios between the amplitudes of the signal received at the (n)th sampling period and (n-1)th sampling period (where n is integer); calculating the distances between the amplitude ratios of signals received at each antenna and each amplitude candidate value; and computing the amplitude decision variables of the received signal by multiplying the distances by the amplitudes of signals received at the (n)th sampling period.

## BRIEF DESCRIPTION OF THE DRAWINGS

Figure 1 is a schematic view showing the differential amplitude detection diversity receiver employing MRC according to a preferred embodiment of the present invention.

Figure 2 is a flowchart illustrating operations of differential amplitude detection diversity receiver employing MRC according to the preferred embodiment of the present invention.

## DETAILED DESCRIPTION OF PREFERRED EMBODIMENTS

Hereinafter, the preferred embodiment of the present invention will be described in detail with reference to attached drawings.

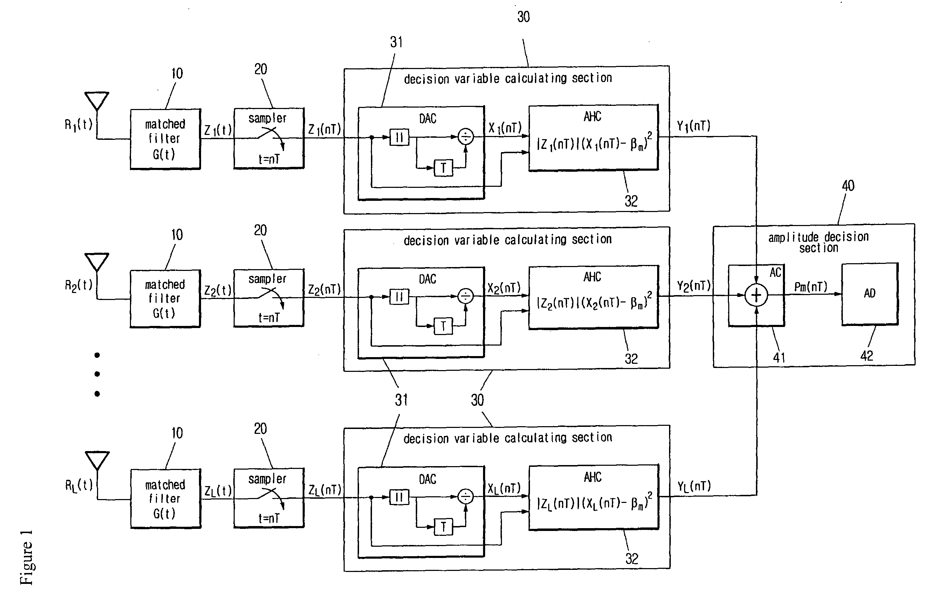

Differential amplitude detection diversity receiver employing MRC according to a preferred embodiment of the present invention, as shown in Fig. 1, includes: a majority of matched filters 10 filtering signals received through a majority of antennas; a majority of samplers 20 converting the received analog signals into digital signals every certain period T; a majority of decision variable calculating sections 30 computing amplitude decision variables determining the amplitude of the received signal; and amplitude decision section 40 composing the computed amplitude decision variables and determining the amplitude of the signal by selecting the most appropriate amplitude candidate value.

The decision variable calculating section 30 includes DAC 31 calculating the amplitude ratios of the received signals; and AHC 32 computing the amplitude decision variables of the received signal by calculating the distances, between the amplitude ratios of signals received at each antenna calculated at the DAC and each amplitude candidate value, and by multiplying the distances by the amplitudes of signals received at the (n)th sampling period.

The amplitude decision section 40 includes AC 41 composing the amplitude decision variables computed by the decision variable calculating section 30; and AD 42 determining the amplitude of the received signal by selecting amplitude candidate value corresponding to the composed amplitude decision variable, whose magnitude is the minimum among the composed amplitude decision variables,

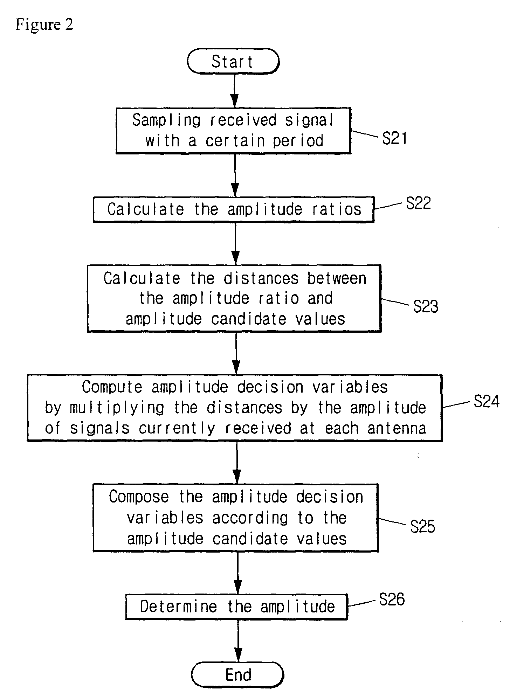

Operations of the above-mentioned differential amplitude detection diversity receiver will be described in detail with reference to Figure 2.

Matched filter 10 restricts signals received through L antenna ($R_l(t),l=1,2,3,...,L$) to a prescribed bandwidth and outputs signals having maximized S/N. Output of the matched signal ($Z_l(t),l=1,2,3,...,L$) is determined from following equation 2

【equation 2】

$$Z_l(t) = \sum_{t=-\infty}^{\infty} R_l(t)G(T-t)dt$$

Where G(t) is filter function.

Received signal that passed through the matched filter 10 is inputted into the sampler 20. The sampler 20 extracts digital symbol from $Z_l(t)$, output of the matched filter 10, every symbol period T and outputs the digital symbol to DAC 31 (S21). Then, DAC 31 calculates the amplitude ratios between amplitudes of the digital symbol extracted at a certain symbol period (nT) and at the previous symbol period ((n-1)T), and outputs the amplitude ratios (S22).

In other words, DAC 31 calculates the amplitude ratio $X_l(nT)$ between the digital symbols ($Z_l(nT)$, $n$=1,2,3,...,$N$) extracted at (n)th symbol period and the digital symbols ($Z_l((n$-1)$T),n$=1,2,3,...,$N$) extracted at (n-1)th symbol period. The amplitude ratio $X_l(nT)$ is determined from the following equation 3.

[equation 3]

$$X_l(nT) = \frac{|Z_l(nT)|}{|Z_l((n\text{-}1)T)|}$$

When output of the DAC 31 is inputted into AHC 32, the AHC 32 calculates the distances between the amplitude ratio $X_l(nT)$ and the M amplitude candidate values ($\beta_m$, m=1,..., M) (S23) and computes M amplitude decision variables $Y_l(nT)$ by multiplying the distances by the amplitude of signals currently received at each antenna (S24).

In other words, the AHC 32 calculates the distances between the amplitude ratio $X_l(nT)$ of the received signals and the M amplitude candidate values $\beta_m$, where M is the number of the amplitude candidate values $\beta_m$. The reason the AHC 32 calculates the distances between the amplitude ratios $X_l(nT)$ of the received signals and each amplitude candidate value $\beta_m$ is because it has a good possibility that the amplitude candidate value $\beta_m$, when the distance is the minimum, may be the exact amplitude of the signal.

Then, the AHC 32 produces M amplitude decision variables $Y_l(nT)$ by multiplying the distances between the amplitude ratio $X_l(nT)$ and the M amplitude candidate values $\beta_m$ by the amplitudes of signals currently received at the antenna and outputs M amplitude decision variables $Y_l(nT)$. The amplitude decision variables $Y_l(nT)$ are determined from following equation 4.

[equation 4]

$$Y_l(nt) = |Z_l(nT)|[X_l(nT)\text{-}\beta_m]^2$$

Finally, AC 41 composes the amplitude decision variables, produced by L AHC 32 (where L is the number of AHC), according to the amplitude candidate values (S25) and AD 42 determines the amplitude of the received signal by selecting amplitude candidate value $\beta_m$ corresponding to the composed amplitude decision variable, whose magnitude is the minimum among M composed amplitude decision variables Pm(nT).

The present invention, which calculates the distances between the amplitude ratios of the received signal and each amplitude candidate value and multiplies the distances by the amplitudes of signal currently received at each antenna, adds an extra weight to the more reliable signal, thus, the efficiency of the differential amplitude detection diversity receiver may be increased.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

**Claims**

1. A differential amplitude detection diversity receiver employing MRC, comprising:

   a majority of decision variable calculating sections configured to compute amplitude decision variables by multiplying the distances by the amplitudes of signals currently received at each antenna; and
   amplitude decision section configured to compose the computed amplitude decision variables and to determine the amplitude of the received signal by selecting amplitude candidate value corresponding to a certain composed amplitude decision variable from the composed amplitude decision variables.

2. The diversity receiver of claim 1, wherein the decision variable calculating section comprises:

   a majority of Differential Amplitude Calculators (DAC) configured to calculate the amplitude ratios between the amplitudes of the signal received at the (n)th sampling period and (n-1)th sampling period (where n is integer); and
   a majority of Amplitude Hypothesis Calculators (AHC) configured to compute the amplitude decision variables of the received signal by calculating the distances, between the amplitude ratios of signals received at each antenna and each amplitude candidate value, and by multiplying the distances by the amplitudes of signals received at the (n)th sampling period.

3. The diversity receiver of claim 1, wherein the amplitude decision section comprises:

   Amplitude Combiner (AC) configured to compose the amplitude decision variables of each antenna, computed by the decision variable calculating section, according to the amplitude candidate values; and

Amplitude Detector (AD) configured to determine the amplitude of the received signal by selecting amplitude candidate value corresponding to the composed amplitude decision variable, whose magnitude is the minimum among the composed amplitude decision variables.

4. A method of receiving signals using a differential amplitude detection diversity receiver employing MRC, comprising:

computing amplitude decision variables by multiplying the distances between the amplitude ratios of signals received at each antenna and each amplitude candidate value by the amplitudes of signals currently received at each antenna;

composing the amplitude decision variables of each antenna according to the amplitude candidate values; and

determining the amplitude of the received signal by selecting amplitude candidate value corresponding to the composed amplitude decision variable, whose magnitude is the minimum among the composed amplitude decision variables.

5. The method of claim 4, wherein said computing amplitude decision variables comprises:

calculating the amplitude ratios between the amplitudes of the signal received at the (n)th sampling period and (n-1)th sampling period (where n is integer);

calculating the distances between the amplitude ratios of signals received at each antenna and each amplitude candidate value; and

computing the amplitude decision variables of the received signal by multiplying the distances by the amplitudes of signals received at the (n)th sampling period.

Figure 1

Figure 2

```
                    ┌─────────────┐
                    │    Start    │
                    └──────┬──────┘
                           │
                           ▼
          ┌───────────────────────────────┐
          │  Sampling received signal     │───── S21
          │     with a certain period     │
          └───────────────┬───────────────┘
                          │
                          ▼
          ┌───────────────────────────────┐
          │  Calculate the amplitude ratios│───── S22
          └───────────────┬───────────────┘
                          │
                          ▼
          ┌───────────────────────────────┐
          │  Calculate the distances between│
          │      the amplitude ratio and   │───── S23
          │    amplitude candidate values  │
          └───────────────┬───────────────┘
                          │
                          ▼
       ┌──────────────────────────────────────┐
       │   Compute amplitude decision variables│
       │ by multiplying the distances by the amplitude│───── S24
       │ of signals currently received at each antenna│
       └──────────────────┬───────────────────┘
                          │
                          ▼
          ┌───────────────────────────────┐
          │  Compose the amplitude decision│
          │     variables according to the │───── S25
          │    amplitude candidate values  │
          └───────────────┬───────────────┘
                          │
                          ▼
          ┌───────────────────────────────┐
          │     Determine the amplitude    │───── S26
          └───────────────┬───────────────┘
                          │
                          ▼
                   ┌─────────────┐
                   │     End     │
                   └─────────────┘
```

**European Patent Office**

**EUROPEAN SEARCH REPORT**

Application Number

EP 03 01 6831

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JONG YOUL LEE, YOUNG MO CHUNG, SANG UK LEE: "Postdetection Diversity Receiver for DAPSK Signals on the Rayleigh- and Rician-Fading Channel" IEEE TRANSACTIONS ON VEHICULAR TECHNOLOGY, vol. 50, no. 5, September 2001 (2001-09), pages 1193-1202, XP002258476 * abstract * *section I. Introduction * *section IV: Diversity Reception * *equation 24,27 * * figure 2 *<br>--- | 1-5 | H04B7/08 |
| X | JONG YOUL LEE ET AL: "Postdetection diversity receiver for dapsk signal over the rayleigh and rician fading channel" VTC 2000, vol. 6, 24 September 2000 (2000-09-24), pages 2799-2808, XP010525092 * abstract * * section I. Introduction * * section III. Diversity Reception * * Equations 2,3 * * figure 1 *<br>---<br>-/-- | 1-5 | TECHNICAL FIELDS SEARCHED (Int.Cl.7)<br><br>H04B |

The present search report has been drawn up for all claims

| Place of search | Date of completion of the search | Examiner |
|---|---|---|
| MUNICH | 21 October 2003 | Schreib, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 01 6831

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | OHTSUKI T: "Viterbi decoding differential detection with space diversity for 16DAPSK on Rayleigh fading channels" PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA,IEEE, US, 1 September 1997 (1997-09-01), pages 949-953, XP010247588 ISBN: 0-7803-3871-5 * abstract * * section I. Introduction * * figure 2 * | 1-5 | |
| A | CHOW Y C ET AL: "Error performance of circular 16-DAPSK with postdetection diversity reception in Rayleigh fading channels" IEE PROCEEDINGS: COMMUNICATIONS, INSTITUTION OF ELECTRICAL ENGINEERS, GB, vol. 144, no. 3, 17 June 1997 (1997-06-17), pages 180-190, XP006008459 ISSN: 1350-2425 * abstract * * section 2.3 * * equation 6 * * figure 2 * | 1-5 | TECHNICAL FIELDS SEARCHED (Int.Cl.7) |

The present search report has been drawn up for all claims

| Place of search | Date of completion of the search | Examiner |
|---|---|---|
| MUNICH | 21 October 2003 | Schreib, F |

EPO FORM 1503 03.82 (P04C01)